(19)

Europäisches
Patentamt
European
Patent Office
Office européen
des brevets

(11) **EP 3 875 258 A1**

(12) **EUROPEAN PATENT APPLICATION**
published in accordance with Art. 153(4) EPC

(43) Date of publication:
**08.09.2021 Bulletin 2021/36**

(21) Application number: **19878266.6**

(22) Date of filing: **01.11.2019**

(51) Int Cl.:
**B29D 11/00** (2006.01)          **B29C 55/02** (2006.01)
**G02B 5/30** (2006.01)          **G02B 1/04** (2006.01)
**B29K 33/04** (2006.01)

(86) International application number:
**PCT/KR2019/014575**

(87) International publication number:
**WO 2020/091451 (07.05.2020 Gazette 2020/19)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **02.11.2018 KR 20180133681**

(71) Applicant: **LG Chem, Ltd.**
**Seoul 07336, (KR)**

(72) Inventors:
• **HUH, Doo Young**
  **Daejeon 34122 (KR)**

• **KIM, Yeon Soo**
  **Daejeon 34122 (KR)**
• **KIM, You Kyeong**
  **Daejeon 34122 (KR)**
• **HONG, Kyung Ki**
  **Daejeon 34122 (KR)**
• **RAH, Kyun Il**
  **Daejeon 34122 (KR)**
• **LEE, Young Min**
  **Daejeon 34122 (KR)**
• **CHO, Woo Yong**
  **Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **METHOD FOR MANUFACTURING POLARIZER**

(57) The present application can provide a polarizer showing low orthogonal transmittance for visible light and high orthogonal transmittance for near infrared rays, and a polarizing plate comprising the same, wherein such a polarizer or polarizing plate can be used in a variety of devices using visible light and near infrared rays. A method for preparing the polarizer and a camera are also provided.

**EP 3 875 258 A1**

## Description

## Technical Field

This application claims the benefit of priority based on Korean Patent Application No. 10-2018-0133681 filed on November 2, 2018, the disclosure of which is incorporated herein by reference in its entirety.

The present application relates to a method for preparing a polarizer, a polarizer, a polarizing plate, and a device comprising the polarizer or the polarizing plate.

## Background Art

Cameras of augmented reality (AR) devices typically have two sensing parts. One is a visible light sensor that recognizes an image of a subject, and the other is a near infrared sensor (NIR sensor) that recognizes a distance from a subject.

A liquid crystal cell is used to adjust the amount of visible light entering the sensor in the sensor site that recognizes the image, where the liquid crystal cell adjusts the amount of the incident visible light while acting as a shutter between two crossed polarizing plates.

An NIR projector and an NIR sensor are used for the sensing to recognize the distance to the image, where the near infrared rays (NIR) irradiated from the NIR projector are reflected from the subject and the reflected near infrared rays are recognized by the sensor to sense the distance to the subject.

In the camera of the augmented reality device, the NIR sensor and the visible light sensor are configured separately, because the transmittance of the polarizing plate applied to the visible light sensor for near infrared rays is low.

## Disclosure

## Technical Problem

The present application provides a method for preparing a polarizer, a polarizer, a polarizing plate, and a device comprising the polarizer or the polarizing plate.

It is an object of the present application to provide a polarizer showing low orthogonal transmittance for visible light and high orthogonal transmittance for near infrared rays, and a polarizing plate comprising the same. Such a polarizer or polarizing plate may be applied to various devices using near infrared rays and visible light, and in one example, it may be used to configure a device by integrating a visible light sensor part and a near infrared sensor part in a camera for an augmented reality device.

## Technical Solution

The present application relates to a method for preparing a polarizer. In this specification, the terms, polarizer and polarizing plate, have different meanings. The term polarizer means, for example, a functional element itself that exhibits a polarizing function, such as a PVA (poly(vinyl alcohol))-based film, and the polarizing plate means an element comprising other components together with the polarizer. Other components included together with the polarizer may be exemplified by a polarizer protective film, an optical retardation film, an adhesive layer, a pressure-sensitive adhesive layer, a low reflection layer, or an anti-reflection layer (AR), and the like, but are not limited thereto.

The polarizer of the present application may be, for example, an absorbing linear polarizer, which may be a so-called PVA (poly(vinyl alcohol))-based polarizer. That is, the polarizer may be a PVA-based film comprising an adsorptive-oriented anisotropic absorbent material. Here, the anisotropic absorbent material may be exemplified by a dichroic dye such as iodine. In this specification, such a polarizer may be referred to as a PVA-based polarizer.

Usually, a PVA-based polarizer is prepared by applying a PVA-based film to dyeing and stretching processes, and if necessary, swelling, crosslinking, washing and/or drying processes may also further be performed as additional processes.

Therefore, the method for preparing a polarizer of the present application may comprise at least the dyeing and stretching processes.

The dyeing process may be performed by immersing a PVA-based film in a dyeing bath comprising an anisotropic absorbent material such as potassium iodide or iodine.

As the PVA-based film applied in the present application, a PVA-based film conventionally used for a polarizer may be used. A material of such a PVA-based film may include PVA or its derivative. A derivative of the PVA may include polyvinyl formal or polyvinyl acetal, and the like, and besides, may include those modified by olefins such as ethylene or propylene, unsaturated carboxylic acids such as acrylic acid, methacrylic acid or crotonic acid and alkyl esters or acrylamides thereof, and the like. The degree of polymerization of PVA is usually 100 to 10000 or so, or 1000 to 10000 or so, and the degree of saponification is 80 mol% to 100 mol% or so, without being limited thereto. The PVA-based film may also be exemplified by hydrophilic polymer films such as partially saponified films of ethylene vinyl acetate copolymer series, polyene-based alignment films such as dehydrated products of PVA or dehydrochloric acid-treated products of polyvinyl chloride, and the like.

In the PVA-based film, an additive such as a plasticizer or a surfactant may be included. Here, the plasticizer may be exemplified by polyols or condensates thereof, and the like, and for example, may be exemplified by glycerin, diglycerine, triglycerine, ethylene glycol, propylene glycol or polyethylene glycol, and the like. When such a plasticizer is used, the ratio is not particularly limited, which may typically be about 20 wt% or less in the PVA-based film.

The thickness of the PVA-based film is not particularly limited, which may be appropriately selected within a range in which each optical characteristic described below can be satisfied.

The dyeing process may be performed by treating the PVA-based film in a dyeing bath containing an anisotropic absorbent material.

The kind of the anisotropic absorbent material applicable to the present application is not specifically limited. In the present application, among the known anisotropic absorbent materials, one that can satisfy the desired optical properties may be appropriately selected. As an example of the anisotropic absorbent material, iodine may be exemplified.

When iodine is applied, the dyeing may be performed by immersing the PVA-based film in a dyeing solution, which is a solution containing iodine as an anisotropic absorbent material. As the iodine solution which is the dyeing solution, for example, an aqueous solution containing iodine and iodine ions by an iodinated compound which is a solubilizing agent may be used. Here, as the iodinated compound, for example, potassium iodide, lithium iodide, sodium iodide, zinc iodide, aluminum iodide, lead iodide, copper iodide, barium iodide, calcium iodide, tin iodide or titanium iodide, and the like may be used.

In one aspect of the preparation method of the present application, it is possible to produce a polarizer having the desired characteristics by controlling the iodine concentration in the dyeing solution to perform the dyeing. In one example, the iodine concentration in the dyeing solution may be 500 ppm or less. In another example, the concentration may be about 480 ppm or less, 460 ppm or less, 440 ppm or less, 420 ppm or less, or 400 ppm or less, and may be about 10 ppm or more, 20 ppm or more, 30 ppm or more, 40 ppm or more, 50 ppm or more, 60 ppm or more, 70 ppm or more, 80 ppm or more, 90 ppm or more, 100 ppm or more, 150 ppm or more, 200 ppm or more, 250 ppm or more, 300 ppm or more, or 350 ppm or more.

The iodine concentration of the dyeing solution mentioned in the present application is a concentration of an I2 component. The method of measuring a concentration of such an I2 component is well-known, which can be confirmed, for example, using a measuring instrument, such as RD-310 (KURABO).

The iodine concentration applied in the present application is a low concentration relative to the iodine concentration in a conventionally performed dyeing process, and by adjusting the iodine concentration in this range, the desired optical properties, for example, low orthogonal transmittance for visible light and high orthogonal transmittance for near infrared rays can be achieved simultaneously.

In the dyeing process, the temperature of the iodine solution is usually 20°C to 50°C, or 25°C to 40°C or so, and the immersion time is usually 10 seconds to 300 seconds or 20 seconds to 240 seconds or so, without being limited thereto.

In the preparation method of the present application, a stretching process is performed. This stretching process may be performed separately from the dyeing process after the dyeing process, or the dyeing process and the stretching process may be performed simultaneously by performing stretching in the dyeing solution. The stretching is generally performed by uniaxial stretching, but a biaxial stretching process may also be performed. The stretching method is not particularly limited, which may be applied by, for example, a wet stretching method. In this wet stretching method, for example, the stretching is generally performed after the dyeing, but the stretching may be performed together with crosslinking, and may also be performed in multiple times or multiple stages.

The treatment liquid applied to the wet stretching method may contain an iodinated compound such as potassium iodide. In the stretching, the treatment temperature is typically in a range of 25°C or higher, 30°C to 85°C or 50°C to 70°C or so, and the treatment time is usually 10 seconds to 800 seconds or 30 seconds to 500 seconds, without being limited thereto. If necessary, the iodine concentration in the treatment liquid may also be controlled according to the concentration of the treatment liquid.

In the stretching process, the total draw ratio may be adjusted in consideration of the orientation characteristics and the like, where the total draw ratio may be 3 to 10 times, 4 to 8 times or 5 to 7 times or so based on the original length of the PVA-based film, but is not limited thereto. Here, when the stretching is accompanied even in a swelling process or the like other than the stretching process, the total draw ratio may mean a cumulative draw ratio including the stretching in each process. Such a total draw ratio may be adjusted to an appropriate range in consideration of orientation, processability of the polarizer or stretch cutting possibility, and the like.

In the preparation process of a polarizer, in addition to the dyeing and stretching, a swelling process may also be performed before performing the processes. By the swelling, contamination or an antiblocking agent on the surface of the PVA-based film may be washed, whereby there is also an effect capable of reducing unevenness such as dyeing deviations.

In the swelling process, water, distilled water or pure water, and the like may be used. The main component of the relevant treatment liquid is water, and if necessary, an iodinated compound such as potassium iodide or additives such as a surfactant, or alcohol, and the like may be contained in a small amount.

In the swelling process, the treatment temperature is typically 20°C to 45°C or 20°C to 40°C or so, but is not limited thereto. Since swelling deviations may cause the dyeing deviations, the process parameters may be adjusted so that the occurrence of such swelling deviations is suppressed as much as possible.

If necessary, proper stretching may also be performed in the swelling process. The draw ratio may be 6.5 times or less, 1.2 to 6.5 times, 2 to 4 times or 2 to 3 times or so based on the original length of the PVA-based film. In the swelling process, the stretching may be controlled for the stretching in the stretching process performed after the swelling process to be small, and may be controlled so that the stretching fracture of the film does not occur.

In the preparation process of the polarizer, a crosslinking process may be further performed. The crosslinking process may be performed using a crosslinking agent such as, for example, a boron compound. The order of this crosslinking process is not particularly limited, where it may be performed, for example, together with the dyeing and/or stretching process or may proceed separately before or after the process. The crosslinking process may also be performed in multiple times. As the boron compound, boric acid or borax may be used. The boron compound may be generally used in the form of an aqueous solution or a mixed solution of water and an organic solvent, and a boric acid aqueous solution is usually used. The boric acid concentration in the boric acid aqueous solution may be selected in an appropriate range in consideration of a degree of crosslinking and accordingly heat resistance thereof, and the like. The boric acid aqueous solution or the like can also contain an iodinated compounds such as potassium iodide.

The crosslinking process may be performed by immersing the PVA-based film in a boric acid aqueous solution or the like, where in this process, the treatment temperature is usually in the range of 25°C or higher, 30°C to 85°C or 30°C to 60°C, and the treatment time is typically 5 seconds to 800 seconds or 8 seconds to 500 seconds or so, without being limited thereto.

As an additional optional process in the preparation process of the polarizer, metal ion treatment may be performed. This treatment is performed, for example, by immersing the PVA-based film in an aqueous solution containing a metal salt. Through this, metal ions may be contained in the polarizer, where it is also possible to adjust the color tone of the PVA-based polarizer by adjusting the type or ratio of metal ions in this process. The applicable metal ions may be exemplified by metal ions of a transition metal such as cobalt, nickel, zinc, chromium, aluminum, copper, manganese or iron, and it is also possible to adjust the color tone by selecting an appropriate kind of them.

In the preparation process of the polarizer, a washing process may be performed after the dyeing and stretching. This washing process may be performed by a solution of an iodine compound such as potassium iodide, and may be performed using water. When the washing process is performed using the solution of the iodine compound, the control of the iodine concentration may also be performed as necessary.

The washing with water and the washing with a solution of an iodine compound solution may also be combined, and a solution that a liquid alcohol such as methanol, ethanol, isopropyl alcohol, butanol or propanol is formulated may also be used.

In the preparation process of the polarizer, a drying process may also be performed. The drying process may be performed at an appropriate temperature for a suitable time, for example, in consideration of a moisture percentage required for the polarizer, and the like, and such conditions are not particularly limited.

In the preparation process of the polarizer of the present application, a heat treatment process may be performed, as an additional process. The inventors have confirmed that it is advantageous to achieve the desired optical properties (high orthogonal transmittance for near infrared rays and low orthogonal transmittance for visible light) by performing an appropriate heat treatment process. The time point when the heat treatment process is performed is not particularly limited, but it may be performed after the stretching process of the polarizer. For example, the heat treatment may be performed in the drying step of the polarizer after the stretching process, or the heat treatment process may also be performed on a laminate after attaching a protective film or the like to the polarizer after stretching.

The heat treatment temperature in the heat treatment process may be about 90°C or more, about 95°C or more, or about 100°C or more. Through the heat treatment in this range, it is possible to produce a polarizer with desired characteristics. The upper limit of the heat treatment temperature is not particularly limited, but for example, the heat treatment temperature may be about 200°C or less, 180°C or less, 160°C or less, 140°C or less, or 120°C or less or so.

The heat treatment time may be, for example, about 20 seconds or more. In another example, the heat treatment time may be about 30 seconds or more, 40 seconds or more, 50 seconds or more, 60 seconds or more, 70 seconds or more, 80 seconds or more, 90 seconds or more, 100 seconds or more, 110 seconds or more, 120 seconds or more, 130 seconds or more, 140 seconds or more, or 150 seconds or more. The heat treatment may be, for example, about 1,000 seconds or less, 900 seconds or less, 800 seconds or less, 700 seconds or less, 600 seconds or less, 500 seconds or less, 400 seconds or less, or about 300 seconds or less or so. By performing this heat treatment process, it is possible to more effectively produce a polarizer having desired optical properties.

In the preparation process of the polarizer of the present application, a process of introducing any configuration constituting a polarizing plate may also be performed, as an additional process. The method that this additional process is performed may be strictly a preparation method of the polarizing plate, but for convenience, is referred to as a preparation method of a polarizer.

In one example, the preparation method may further perform a process of forming a near-infrared antireflection layer on one side of the polarizer.

By further forming the near-infrared antireflection layer, it is possible to more effectively achieve the desired optical properties (low visible light orthogonal transmittance and high near infrared orthogonal transmittance).

The method of forming such a near-infrared antireflection layer is well known, and it may be formed using, for example, one or more materials selected from the group consisting of $Ta_2O_5$, $SiO_2$, $ZrO_2$, $TiO_2$, $Y_2O_3$ and $Al_2O_3$. For example, the near-infrared antireflection layer may be formed by laminating two or more layers which are made of any material selected from the materials, and if necessary, other known near-infrared antireflection layers may also be applied.

The antireflection layer may also be formed directly on the polarizer, but is usually formed on a protective film formed on one or both sides of the polarizer.

Therefore, in the preparation method, a step of forming a protective film on at least one side of the PVA-based film may be further performed, where the antireflection layer may be formed on the surface of the opposite side to the surface of the protective film in contact with the PVA-based film.

The antireflection layer may also be previously formed on the surface of the protective film, and after a protective film is attached to one side of the polarizer, it may also be formed on the protective film.

As the protective film that may be included in the polarizing plate, a film of a known material may be used. As such a material, for example, a thermoplastic resin having excellent transparency, mechanical strength, thermal stability, moisture barrier property or isotropy, and the like may be used. An example of such a resin may be exemplified by a cellulose resin such as TAC (triacetyl cellulose), a polyester resin, a polyether sulfone resin, a polysulfone resin, a polycarbonate resin, a polyamide resin, a polyimide resin, a polyolefin resin, a (meth)acrylic resin, a cyclic polyolefin resin such as a norbornene resin, a polyarylate resin, a polystyrene resin, a polyvinyl alcohol resin or a mixture of the foregoing, and the like. For example, the protective film may be present on one side or both sides of the polarizer, and when they are present on both side, the respective protective films may be the same or different. Also, in addition to the protective film in the form of a film, a cured resin layer obtained by curing a thermosetting or photocurable resin such as (meth)acrylic series, urethane series, acrylic urethane series, epoxy series or silicone series may also be applied as the protective film.

The thickness of the protective film may be appropriately adjusted, which may be adjusted usually within a range of 1 to 500 $\mu$m, 1 to 300 $\mu$m, 5 to 200 $\mu$m or 5 to 150 $\mu$m in view of workability such as strength or handleability, thinning or the like.

The above-described protective film may be attached to the polarizer by an adhesive or the like, where such a protective film or the like may be subjected to easy adhesion treatment such as corona treatment, plasma treatment, primer treatment or saponification treatment.

The adhesive used for adhesion between the polarizer and the protective film or the like may be exemplified by an isocyanate-based adhesive, a polyvinyl alcohol-based adhesive, a gelatin-based adhesive, vinylic latex series or a water-based polyester, and the like, but is not limited thereto. As the adhesive, a water-based adhesive may be generally used, but a solventless type photocurable adhesive may also be used depending on the type of the film to be attached.

In the preparation process of the polarizer or the polarizing plate, a process of applying various configurations constituting the polarizing plate in addition to the protective film or the antireflection layer may also be performed. Such a configuration may be exemplified by a retardation film, a reflecting plate, a hard coat layer, a pressure-sensitive adhesive layer or a semi-transmissive plate, and the like, but is not limited thereto, and the method of applying the configuration also follows a known method.

The present application also relates to a polarizer. The polarizer of the present application may be the aforementioned PVA-based polarizer.

Thus, the polarizer may be a PVA-based film comprising an adsorptive-oriented anisotropic absorbent material. Here, the anisotropic absorbent material may be exemplified by a dichroic dye such as iodine.

The polarizer is an absorbing linear polarizer, which may comprise a light absorption axis formed in at least one in-plane direction and a light transmission axis formed approximately perpendicular to the light absorption axis.

The polarizer may be prepared by the method of the present application as described above.

The polarizer has orthogonal transmittance (Tc) of about 1% or less, about 0.9% or less, about 0.8% or less, about 0.7% or less, about 0.6% or less, about 0.5% or less, about 0.4% or less, about 0.3% or less, about 0.2% or less, about 0.1% or less, about 0.09% or less, about 0.08% or less, about 0.07% or less, about 0.06% or less, about 0.05% or less, about 0.04% or less, about 0.03% or less, about 0.02% or less, about 0.01% or less, about 0.009% or less, about 0.006% or less, about 0.005% or less, about 0.004% or less, about 0.001% or less, or about 0.0009% or less, for light in the visible light region. The transmittance (Tc) may be about 0.0001% or more.

In this specification, the orthogonal transmittance (Tc) may mean transmittance (Tc) showing the minimum value of transmittance when the transmittance has been measured in a state where two polarizers are overlapped while scanning the overlapped state by angle so that the light absorption axis of each polarizer forms an angle in a range of 0 to 360 degrees. Here, of two polarizers to be overlapped, at least one polarizer may be a polarizer according to the present application, and the other polarizer may be a polarizer according to the present application or another polarizer, for example, a polarizer provided in measurement equipment.

In addition, the transmittance for visible light mentioned in this specification may be transmittance for light with any wavelength within the range of approximately 380 nm to 780 nm, the minimum or maximum transmittance among the transmittance within the wavelength range, or the average transmittance within the wavelength range, or may be transmittance for light with a wavelength of about 550 nm.

The polarizer may exhibit high orthogonal transmittance (Tc) for light in the near infrared region. Here, the meaning of the orthogonal transmittance (Tc) is as described above, and only the measurement reference light is near infrared rays. In one example, the polarizer may have orthogonal transmittance (Tc) of about 70% or more, about 71% or more, about 72% or more, about 73% or more, about 74% or more, or about 75% or more for light with a wavelength of approximately 850 nm. The orthogonal transmittance (Tc) may be about 99% or less, 95% or less, or about 90% or less or so.

The polarizer may also have orthogonal transmittance (Tc) of about 70% or more, about 71% or more, about 72% or more, about 73% or more, about 74% or more, or about 75% or more for light with a wavelength of approximately 860 nm. The orthogonal transmittance (Tc) may be about 99% or less, 95% or less, or about 90% or less or so.

The polarizer can also satisfy other functions required for the polarizer while exhibiting the above-described optical characteristics.

For example, the polarizer may have single transmittance (Ts), that is, transmittance (Ts) for unpolarized light of about 35% or more, or about 40% or more. The single transmittance (Ts) may be about 60% or less, about 55% or less, about 50% or less, or about 45% or less. The single transmittance (Ts) may be, for example, transmittance measured with respect to one polarizer.

In addition, the polarizer may have a polarization degree of about 99.9% or more, or about 99.99% or more. In the present application, the polarization degree is a numerical value calculated according to Equation 1 below.

[Equation 1]

$$\text{Polarization degree (P) (\%)} = \{(Tp - Tc)/(Tp + Tc)\}^{1/2} \times 100$$

In Equation 1, Tp is the transmittance of the polarizer for light linearly polarized in parallel with the light absorption axis of the polarizer, and Tc is the orthogonal transmittance.

In another example, the transmittance (Tp) in Equation 1 may be transmittance at the time of displaying the maximum value when the transmittance has been measured in a state where two polarizers are overlapped while scanning the overlapped state by angle so that the light absorption axis of each polarizer forms an angle in a range of 0 to 360 degrees, and the transmittance (Tc) may be transmittance at the time of displaying the minimum transmittance upon scanning by angle as above.

The above-mentioned single transmittance and polarization degree are physical quantities for visible light, and thus may be physical quantities for light with any wavelength in the range of approximately 380 nm to 780 nm, minimum or maximum physical quantities within the wavelength range, average values within the wavelength range, or numerical values for light with a wavelength of about 550 nm.

The present application also relates to a polarizing plate, where the polarizing plate may comprise at least the polarizer.

Other components that may be included in the polarizing plate of the present application may be exemplified by a polarizer protective film, a pressure-sensitive adhesive layer, an adhesive layer, a retardation film or a low reflection layer, and the like. If necessary, the properties of the overall polarizing plate can be adjusted through adjustment of other components, thereby improving compatibility for use in the present application.

For example, as described above, by comprising the above-described near-infrared antireflection layer in the polarizing plate, that is, at least one side of the polarizer, it is possible to more effectively achieve the desired optical properties. As mentioned, the antireflection layer may be formed directly on one side of the polarizer, or may be formed on the outside or the like of the protective film formed on one side of the polarizer.

The present application also relates to a device comprising the polarizer or the polarizing plate. The type of the device to which the polarizer or the polarizing plate of the present application may be applied is not particularly limited, and it may be applied to various devices using visible light and near infrared rays.

One application to which the polarizer or the polarizing plate of the present application may be applied includes an augmented reality device or a camera of an augmented reality device.

As described above, in the augmented reality device or the camera, a sensing part for visible light and a sensing part for near infrared ray are formed separately, because the transmittance of the polarizing plate, which is applied to the liquid crystal cell applied as the light quantity control unit to the visible light sensing part, for near infrared rays is low.

However, since the polarizer and the polarizing plate of the present application show low orthogonal transmittance in the visible light region and high orthogonal transmittance in the near infrared region, a structure in which the sensing part for visible light and the sensing part for near infrared rays are integrated can be implemented, whereby it is possible to provide cameras and devices that are compact and lightweight, and have high utilization of internal space.

The augmented reality device or camera can be configured by a known configuration and method without any particular limitation, except that a polarizer or a polarizing plate of the present application is applied, whereby a sensing part for visible light and a sensing part for near infrared rays can be integrated.

In one example, the augmented reality device or camera may comprise a sensor part, a light quantity control part and a near infrared projector.

Here, the types of the applied sensor part, light quantity control part and near infrared projector are not particularly limited, and known configurations may be applied.

For example, the sensor part comprises at least a visible light sensing part that recognizes an image of a subject and/or a near-infrared sensing part that recognizes a distance to a subject, or is integrated with the visible light sensing part that recognizes an image of a subject and the near-infrared sensing part that recognizes a distance to a subject, which may be a sensor part to perform visible light sensing that recognizes an image of a subject and near-infrared sensing that recognizes a distance to a subject.

The light quantity control part may comprise at least a liquid crystal cell and polarizing plates disposed on both sides of the liquid crystal cell so that their light absorption axes are perpendicular to each other.

At this time, both or at least one of the polarizing plates may be each a polarizing plate comprising the polarizer of the present application, or may be the polarizing plate of the present application.

In this configuration, for example, when the integrated sensor part is applied as the sensor part, the device may be configured so that the near infrared rays emitted from the near infrared projector are reflected from the subject, and then pass through the light quantity control part to be sensed by the sensor part.

**Advantageous Effects**

The present application can provide a polarizer showing low orthogonal transmittance for visible light and high orthogonal transmittance for near infrared rays, and a polarizing plate comprising the same, wherein such a polarizer or polarizing plate can be used in a variety of devices using visible light and near infrared rays.

**Mode for Invention**

Hereinafter, the polarizer and the like will be described in more detail by way of examples according to the present application and the like, but the scope of the present application is not limited to the following.

1. **Measurement of physical properties**

In the following examples and comparative examples, using a UV-3150 instrument (Shimadzu), orthogonal transmittance was measured according to the manufacturer's manual. Upon the measurement, the reference wavelength of orthogonal transmittance for visible light was about 550 nm, and the reference wavelength of orthogonal transmittance for near infrared rays was 850 nm or 860 nm.

**Example 1.**

A polarizer was produced by performing the following swelling, dyeing, crosslinking, stretching and washing processes on a PVA (poly(vinyl alcohol)) film having an average polymerization degree of about 2600 or so and a thickness of about 60 $\mu$m or so as a disc film. The swelling was performed by immersing the PVA film in a swelling bath at 25°C for about 1 minute, using pure water as a treatment liquid. Subsequently, the dyeing process was performed by immersing it in a dyeing solution, in which concentrations of iodine and potassium iodide were adjusted, at about 28°C for about 1 minute. Here, the dyeing solution was prepared by dissolving iodine ($I_2$) and potassium iodide (KI) in pure water at a weight ratio of about 1:10 ($I_2$: KI), and as a result of confirming the iodine ($I_2$) concentration of the dyeing solution prepared by the above process with a measuring instrument (RD-310, KURABO), it was about 400 ppm or so. Following the dyeing process, the crosslinking process was performed. The crosslinking process was performed by immersing the PVA film in an aqueous solution containing boric acid at a ratio of about 1 wt% as a treatment solution of a crosslinking bath and stretching it about 0.9 times at a temperature of about 38°C, and the stretching process was also performed in, as a treatment liquid of a stretching bath, the treatment liquid containing boric acid at a concentration of 4 wt%. The stretching process was performed at a temperature of about 58°C, where the draw ratio was about 2.7 times or so. Subsequently, the polarizer was washed with an aqueous solution to prepare a PVA-based polarizer. Subsequently, a well-known TAC (triacetyl cellulose) film was affixed on both sides of the polarizer, and the orthogonal transmittance was measured.

**Example 2.**

The polarizer prepared in Example 1 was further heat-treated after the washing process of Example 1 to prepare a polarizer. After the washing process, the polarizer was dried under appropriate conditions, and then a known TAC (triacetyl cellulose) film was attached to both sides of the polarizer with an adhesive, followed by heat treatment. The heat treatment was performed by maintaining it at a temperature of about 90°C for about 1 minute or so.

**Example 3.**

The polarizer prepared in Example 1 was further heat-treated after the washing process of Example 1 to prepare a polarizer. After the washing process, the polarizer was dried under appropriate conditions, and then a known TAC (triacetyl cellulose) film was attached to both sides of the polarizer with an adhesive, followed by heat treatment. The heat treatment was performed by maintaining it at a temperature of about 90°C for about 90 seconds or so.

**Example 4.**

The polarizer prepared in Example 1 was further heat-treated after the washing process of Example 1 to prepare a polarizer. After the washing process, the polarizer was dried under appropriate conditions, and then a known TAC (triacetyl cellulose) film was attached to both sides of the polarizer with an adhesive, followed by heat treatment. The heat treatment was performed by maintaining it at a temperature of about 90°C for about 120 seconds or so.

**Example 5.**

The polarizer prepared in Example 1 was further heat-treated after the washing process of Example 1 to prepare a polarizer. After the washing process, the polarizer was dried under appropriate conditions, and then a known TAC (triacetyl cellulose) film was attached to both sides of the polarizer with an adhesive, followed by heat treatment. The heat treatment was performed by maintaining it at a temperature of about 90°C for about 150 seconds or so.

**Example 6.**

The polarizer prepared in Example 1 was further heat-treated after the washing process of Example 1 to prepare a polarizer. After the washing process, the polarizer was dried under appropriate conditions, and then a known TAC (triacetyl cellulose) film was attached to both sides of the polarizer with an adhesive, followed by heat treatment. The heat treatment was performed by maintaining it at a temperature of about 100°C for about 30 seconds or so.

**Example 7.**

The polarizer prepared in Example 1 was further heat-treated after the washing process of Example 1 to prepare a polarizer. After the washing process, the polarizer was dried under appropriate conditions, and then a known TAC (triacetyl cellulose) film was attached to both sides of the polarizer with an adhesive, followed by heat treatment. The heat treatment was performed by maintaining it at a temperature of about 100°C for about 45 seconds or so.

**Example 8.**

The polarizer prepared in Example 1 was further heat-treated after the washing process of Example 1 to prepare a polarizer. After the washing process, the polarizer was dried under appropriate conditions, and then a known TAC (triacetyl cellulose) film was attached to both sides of the polarizer with an adhesive, followed by heat treatment. The heat treatment was performed by maintaining it at a temperature of about 100°C for about 60 seconds or so.

**Comparative Example 1.**

A polarizer was prepared in the same manner as in Example 1, but the iodine concentration in the dyeing solution was maintained at about 600 ppm or so to prepare a polarizer.

The orthogonal transmittance of the prepared polarizers in Examples and Comparative Example was summarized in Table 1 below.

[Table 1]

|  | Visible light orthogonal transmittance (Tc) | Orthogonal transmittance for a wavelength of 850 nm (Tc) | Orthogonal transmittance for a wavelength of 860 nm (Tc) |
|---|---|---|---|
| Example 1 | 1% or less | 70.65% | 73.54% |
| Example 2 | 1% or less | 74.14% | 76.65% |
| Example 3 | 1% or less | 75.84% | 77.91% |
| Example 4 | 1% or less | 76.13% | 78.38% |
| Example 5 | 1% or less | 77.42% | 79.34% |
| Example 6 | 1% or less | 74.05% | 76.50% |
| Example 7 | 1% or less | 76.12% | 78.38% |
| Example 8 | 1% or less | 76.54% | 78.68% |
| Comparative Example 1 | 1% or less | 56.62% | 62.72% |

From the results of Table 1 above, it can be seen that according to the present application, it is possible to produce a polarizer having high near infrared orthogonal transmittance and low visible light orthogonal transmittance, and to freely control the transmittance through a change in heat treatment conditions, and the like.

**Claims**

1. A method for preparing a polarizer comprising steps of: dyeing a polyvinyl alcohol-based film in a dyeing bath having an iodine concentration of 500 ppm or less; and stretching the polyvinyl alcohol-based film.

2. The method for preparing a polarizer according to claim 1, wherein the iodine concentration in the dyeing bath is 400 ppm or less.

3. The method for preparing a polarizer according to claim 1, further performing a step of heat-treating the polyvinyl alcohol-based film.

4. The method for preparing a polarizer according to claim 3, wherein the heat treatment is performed at a temperature of 90°C or higher.

5. The method for preparing a polarizer according to claim 3, wherein the heat treatment is performed for 20 seconds or more.

6. The method for preparing a polarizer according to claim 1, further performing a step of forming an infrared antireflection layer on at least one side of the polyvinyl alcohol-based film.

7. The method for preparing a polarizer according to claim 6, further performing a step of forming a protective film on the at least one side of the polyvinyl alcohol-based film, wherein the infrared antireflection layer is formed on the surface of the opposite side to the surface of the protective film in contact with the polyvinyl alcohol-based film.

8. The method for preparing a polarizer according to claim 6, wherein the infrared antireflection layer is formed using one or more selected from the group consisting of $Ta_2O_5$, $SiO_2$, $ZrO_2$, $TiO_2$, $Y_2O_3$ and $Al_2O_3$.

9. A polarizer having orthogonal transmittance (Tc) of 1% or less for light in the visible light region and orthogonal transmittance (Tc) of 70% or more for light with a wavelength of 850 nm.

10. The polarizer according to claim 9, wherein the orthogonal transmittance (Tc) for light with a wavelength of 860 nm is 70% or more.

11. A polarizing plate comprising the polarizer of claim 9 and an infrared antireflection layer formed on at least one side of the polarizer.

12. A camera for an augmented reality device comprising a sensor part to perform visible light sensing for recognizing an image of a subject and near-infrared sensing for recognizing a distance to the subject;

   a light quantity control part including a liquid crystal cell and polarizing plates disposed on both sides of the liquid crystal cell so that light absorption axes are perpendicular to each other; and
   a near infrared projector,
   wherein it is configured so that the near infrared rays emitted from the near infrared projector are reflected from the subject, and then pass through the light quantity control part to be sensed by the sensor part, and
   the polarizing plate comprises the polarizer of claim 9.

13. A camera for an augmented reality device comprising a sensor part to perform visible light sensing for recognizing an image of a subject and near-infrared sensing for recognizing a distance to the subject;

   a light quantity control part including a liquid crystal cell and polarizing plates disposed on both sides of the liquid crystal cell so that light absorption axes are perpendicular to each other; and
   a near infrared projector,
   wherein it is configured so that the near infrared rays emitted from the near infrared projector are reflected from the subject, and then pass through the light quantity control part to be sensed by the sensor part, and
   the polarizing plate is the polarizing plate of claim 11.

## INTERNATIONAL SEARCH REPORT

| International application No. |
| --- |
| **PCT/KR2019/014575** |

| A. CLASSIFICATION OF SUBJECT MATTER |
| --- |
| *B29D 11/00(2006.01)i, B29C 55/02(2006.01)i, G02B 5/30(2006.01)i, G02B 1/04(2006.01)i, B29K 33/04(2006.01)n* |
| According to International Patent Classification (IPC) or to both national classification and IPC |

| B. FIELDS SEARCHED |
| --- |
| Minimum documentation searched (classification system followed by classification symbols) |
| B29D 11/00; C08J 5/18; G02B 5/30; G02F 1/1335; H04B 10/08; B29C 55/02; G02B 1/04; B29K 33/04 |
| Documentation searched other than minimum documentation to the extent that such documents are included in the fields searched |
| Korean utility models and applications for utility models: IPC as above |
| Japanese utility models and applications for utility models: IPC as above |
| Electronic data base consulted during the international search (name of data base and, where practicable, search terms used) |
| eKOMPASS (KIPO internal) & Keywords: polyvinyl alcohol(PVA), iodine, polarizer, visible light, infrared, transmittance |

| C. DOCUMENTS CONSIDERED TO BE RELEVANT | | |
| --- | --- | --- |
| Category* | Citation of document, with indication, where appropriate, of the relevant passages | Relevant to claim No. |
| X | KR 10-2011-0012526 A (LG DISPLAY CO., LTD.) 09 February 2011 | 9-13 |
| | See claims 1, 7-8; paragraphs [0018]-[0032]; figures 2-4. | |
| Y | | 1-8 |
| Y | KR 10-2009-0070080 A (ACE DIGITECH CO., LTD.) 01 July 2009 | 1-8 |
| | See claims 1-2; paragraph [0029]. | |
| A | JP 2016-148724 A (NITTO DENKO CORP.) 18 August 2016 | 1-13 |
| | See claim 1; paragraph [0012]. | |
| A | US 2009-0087192 A1 (LEARD, F. L. et al.) 02 April 2009 | 1-13 |
| | See paragraphs [0012]-[0055]; figures 1-5. | |
| A | KR 10-2013-0003465 A (LG CHEM, LTD.) 09 January 2013 | 1-13 |
| | See claims 8-14; paragraphs [0018]-[0024]. | |

| ☐ Further documents are listed in the continuation of Box C. | ☒ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 10 FEBRUARY 2020 (10.02.2020) | **10 FEBRUARY 2020 (10.02.2020)** |

| Name and mailing address of the ISA/KR | Authorized officer |
| --- | --- |
| Korean Intellectual Property Office Government Complex Daejeon Building 4, 189, Cheongsa-ro, Seo-gu, Daejeon, 35208, Republic of Korea | |
| Facsimile No. +82-42-481-8578 | Telephone No. |

Form PCT/ISA/210 (second sheet) (January 2015)

**INTERNATIONAL SEARCH REPORT**
Information on patent family members

International application No.

**PCT/KR2019/014575**

| Patent document cited in search report | Publication date | Patent family member | Publication date |
|---|---|---|---|
| KR 10-2011-0012526 A | 09/02/2011 | None | |
| KR 10-2009-0070080 A | 01/07/2009 | KR 10-0947938 B1 | 15/03/2010 |
| JP 2016-148724 A | 18/08/2016 | JP 6274446 B2 | 07/02/2018 |
| US 2009-0087192 A1 | 02/04/2009 | CN 101532851 A | 16/09/2009 |
| | | CN 101532851 B | 14/08/2013 |
| | | EP 2042854 A2 | 01/04/2009 |
| | | EP 2042854 A3 | 12/05/2010 |
| KR 10-2013-0003465 A | 09/01/2013 | KR 10-1475556 B1 | 22/12/2014 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020180133681